# EUROPÄISCHE PATENTANMELDUNG

(11) **EP 2 672 082 A1**
(43) Veröffentlichungstag der Anmeldung: **11.12.2013**
(21) Anmeldenummer: 13168696.6
(22) Anmeldetag: 22.05.2013
(51) Int. Cl.: F01M 3/00, F01M 13/00, F16N 31/02

(54) **Schmiermittelsammelvorrichtung**

(30) Priorität: 05.06.2012 EP 12170866
(71) Anmelder: Wärtsilä Schweiz AG, 8401 Winterthur (CH)
(72) Erfinder: Alder, Roland, 8405 Winterthur (CH)
(74) Vertreter: Sulzer Management AG

(57) **Zusammenfassung**

Eine Kolben-Zylinder Einheit (2) für eine Brennkraftmaschine, insbesondere einen Grossmotor (1) oder Kompressor umfasst einen Zylinder (20) sowie einen Kolben (3), wobei der Zylinder (20) einen Zylindermantel (17) aufweist, der einen Zylinderinnenraum (18) begrenzt, wobei der Kolben (3) eine Kolbenmantelfläche (4), eine Kolbenoberseite (5) und eine Kolbenunterseite (6) aufweist. Der Kolben (3) enthält eine Schmiermittelsammelvorrichtung (7), die im Kolbenkörper (8) angeordnet ist. Die Schmiermittelsammelvorrichtung (7) umfasst eine Ausnehmung (11) an der Kolbenmantelfläche (4) und einen Kanal (9) zur Aufnahme von schmiermittelhaltigem Gas (10), wobei sich der Kanal (9) im Kolbenkörper (8) an die Ausnehmung (11) anschliesst, sodass das schmiermittelhaltiges Gas (10) im Betriebszustand durch den Kanal (9) hindurch in ein Reservoir (13) einleitbar ist.

## Beschreibung

Die Erfindung betrifft eine Kolben-Zylindereinheit mit einer Schmiermittelsammelvorrichtung gemäss dem Oberbegriff von Anspruch 1. Die Erfindung betrifft des Weiteren eine Brennkraftmaschine, insbesondere einen Grossmotor mit einer Kolben-Zylindereinheit mit einer Schmiermittelsammelvorrichtung.

Grossmotoren, insbesondere in der Ausführung als Grossdieselmotoren, die als Zweitakt-oder als Viertakt-Verbrennungskraftmaschinen ausgestaltet sein können, werden häufig als Antriebsaggregate für Schiffe oder auch im stationären Betrieb, z.B. zum Antrieb grosser Generatoren zur Erzeugung elektrischer Energie eingesetzt. Dabei laufen die Grossmotoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Im Betriebszustand gleitet der Kolben an der als Lauffläche dienenden Oberfläche der Wandung des Zylinders, die meist in Form einer Zylinderlaufbuchse (Liner) ausgestaltet ist, entlang. Dabei ist eine Zylinder- bzw. Kolbenschmierung vorgesehen. Einerseits muss der Kolben möglichst leicht, das heisst unbehindert, in dem Zylinder gleiten, andererseits muss der Kolben den Brennraum im Zylinder möglichst gut abdichten, um eine effiziente Umwandlung der beim Verbrennungsprozess freiwerdenden Energie in mechanische Arbeit zu gewährleisten.

Deshalb wird während des Betriebs des Grossdieselmotors üblicherweise ein Schmiermittel, üblicherweise in der Form eines Schmieröls, in den Zylinder eingebracht, um gute Laufeigenschaften des Kolbens zu erzielen und den Verschleiss der Lauffläche, des Kolbens und der Kolbenringe möglichst gering zu halten. Ferner dient das Schmieröl der Neutralisierung aggressiver Verbrennungsprodukte sowie der Vermeidung von Korrosion. Aufgrund dieser zahlreichen Anforderungen werden als Schmiermittel häufig sehr hochwertige und teure Substanzen verwendet.

Es besteht daher im Hinblick auf einen besonders effizienten und wirtschaftlichen Betrieb des Motors das Bedürfnis, mit möglichst geringem Schmiermittelverbrauch zu arbeiten. Unter Schmiermittelverbrauch wird die Menge Schmiermittel verstanden, die für die eigentliche Schmieraufgabe nicht mehr zur Verfügung steht, die also durch den Schmiervorgang verbraucht wird, also verloren geht. Dieser Verlust kann auch dadurch bedingt sein, dass das Schmiermittel als Tröpfchen im Brenngas aufgenommen wird. Dieses Schmiermittel kann in den Brennraum gelangen, sich dort entzünden und mit verbrannt werden, ein Effekt, der an sich unerwünscht ist, weil es zu Fehlzündungen kommen kann oder zu Ablagerungen im Zylinderinnenraum.

Bisher wurde dieser Verbrauch, d.h. der Verlust, durch das über die Schmiervorrichtung zugeführte Schmiermittel kompensiert, das heisst die Schmierrate war gleich dem Verbrauch. Daher besteht das Bedürfnis, den Verlust an Schmiermittel möglichst gering zu halten, sowie einen möglichst hohen Anteil des Schmiermittels wieder zu verwenden, das heisst zu rezyklieren.

Ein bewährtes Schmierverfahren ist die sogenannte Innenschmierung, bei welchem das Schmiermittel durch das Innere des Kolbens gefördert wird und dann über eine oder mehrere Schmierstellen, die auf der Oberfläche des Kolbens vorgesehen sind, aus den Kolbeninneren auf den Kolben bzw. auf die Zylinderlauffläche aufgebracht wird. Ein derartiges Verfahren wird beispielsweise in der EP-A-0 903 473 offenbart.

Es ist eine Vielzahl von Möglichkeiten bekannt, um einer Zylinderinnenwand einer Hubkolbenbrennkraftmaschine Schmiermittel zuzuführen. Beispielsweise zeigen die Dokumente EP 2133520 A1, sowie EP 2253810 A1 Schmiervorrichtungen mit Schmiermittelreservoirs, die im Kolben selbst angeordnet sind. Diese Lösungen betreffen daher die Schmiermittelzufuhr zu der Schmierstelle über den Kolben. Diese Schmiervorrichtungen sind nicht dafür geeignet, das Schmiermittel, welches sich im Gas beispielsweise in Tröpfchenform verteilt befindet, aus dem Zylinderinnenraum zu sammeln und aus dem Zylinderinnenraum abzuleiten.

Um den Schmiermittelbedarf zu reduzieren, sind verschiedene Lösungswege beschritten worden. Einerseits kann ein Ölsammelring vorgesehen sein, wie er beispielsweise aus der EP2133520 A1 bekannt ist, oder aus der EP 1 936 245. Allen diesen Sammelvorrichtungen ist gemeinsam, dass das Schmiermittel in flüssiger Form abgeführt wird.

Die einzige vorbekannte Vorrichtung, welche sich mit der Entnahme von gasförmigen Medien aus der Zylinderinnenraum beschäftigt, ist die EP 2369154 A1. Gemäss der Lehre dieses Dokuments wird die Luft, die in den Brennraum gelangt, vorab über einen Ölfilter geleitet, um den Schmiermittelanteil in der Luft zu verringern. Hierdurch werden die verbrennungsbedingten Emissionen an Stickoxiden (NOx) und anderen Schadstoffen, die durch die Verbrennung von Schmiermittel entstehen würden, wesentlich verringert.

Allerdings erfolgt hier bereits die Abfuhr der Reaktionsprodukte aus einer Verbrennung von Schmiermittel im Brennraum.

Aufgabe der Erfindung ist es daher, derartige Reaktionsprodukte nicht entstehen zu lassen, sondern bereits die Reaktanden, das heisst, insbesondere das Schmiermittel abzuleiten, bevor es durch Selbstentzündung zum Entstehen von Schadstoffen im Brennraum kommt.

Eine weitere Aufgabe der Erfindung ist es den Schmiermittelverbrauch zu senken.

Diese Aufgaben der Erfindung werden mittels einer Schmiermittelsammelvorrichtung gemäss Anspruch 1 gelöst. Die Unteransprüche enthalten weitere vorteilhafte Ausgestaltungen der Erfindung.

Eine Kolben-Zylinder Einheit für eine Brennkraftmaschine, insbesondere einen Grossmotor oder Kompressor umfasst einen Zylinder sowie einen Kolben, wobei der Kolben eine Kolbenmantelfläche, eine Kolbenoberseite und eine Kolbenunterseite aufweist, wobei der Kolben eine Schmiermittelsammelvorrichtung enthält, die im Kolbenkörper angeordnet ist. Die Kolbenmantelfläche, die Kolbenoberseite und die Kolbenunterseite begrenzen einen Kolbenkörper. Der Kolbenkörper kann aus mehreren Teilen bestehen, beispielsweise einen Kolbenkopf und ein Kolbenhemd umfassen. Der Kolbenkörper kann zumindest teilweise mit einem Hohlraum versehen sein, durch welchen ein Kühlmittel in den Kolbenkörper eingebracht werden kann. Die Schmiermittelsammelvorrichtung umfasst eine Ausnehmung an der Kolbenmantelfläche und einen Kanal zur Aufnahme von schmiermittelhaltigem Gas, wobei sich der Kanal im Kolbenkörper an die Ausnehmung anschliesst, sodass ein schmiermittelhaltiges Gas im Betriebszustand durch den Kanal hindurch in ein Reservoir einleitbar ist. Dieses Reservoir kann insbesondere eine Vorrichtung zur Trennung des Schmiermittels vom schmiermittelhaltigen Gas enthalten, also insbesondere ein Separatorelement und/oder ein Filterelement.

Mit der Erfindung kann somit der Schmiermittelgehalt in der Spülluft abgesenkt werden, weil durch die Absaugung des schmiermittelhaltigen Gases aus der Ausnehmung vermieden werden kann, dass ein grosser Anteil an tröpfchenförmigem Schmiermittel in die Spülluft gelangen kann.

Der Kanal kann insbesondere ein Luftkanal sein, der zumindest abschnittsweise als eine Bohrung ausgebildet ist. Insbesondere ist der Schmiermittelanteil des schmiermittelhaltigen Gases klein. Das schmiermittelhaltige Gas, welches durch die Schmiermittelsammelvorrichtung der Erfindung über die Ausnehmung abgesaugt wird, soll 70% bis 80 % des Schmiermittelanteils der Spülluft enthalten, das heisst ein grosser Teil der Schmiermitteltröpfchen kann durch die Schmiermittelsammelvorrichtung aus dem schmiermittelhaltigen Gas abgezogen werden.

Der Masseanteil von Schmiermittel in der Spülluft beträgt gemäss des Standes der Technik mehr als 200 ppm, insbesondere mehr als 100 ppm, typischerweise mindestens 50 ppm. Wird eine Schmiermittelsammelvorrichtung gemäss der Erfindung verwendet, kann der Masseanteil von Schmiermittel in der Spülluft auf unter 40 ppm, vorzugsweise unter 30 ppm, insbesondere unter 10 ppm abgesenkt werden.

Der Masseanteil von Schmiermittel in der Ausnehmung kann bis zu 100 000 ppm betragen, üblicherweise liegt der Masseanteil bei 10 000 ppm. Selbst wenn der Masseanteil nur 1000 ppm betragen sollte, ist die Konzentration mindestens fünfmal so hoch wie in der Spülluft. Das heisst, dass die Konzentration des Schmiermittels im schmiermittelhaltigen Gas an dieser Stelle bis zu 200-mal höher sein kann als in der Spülluft. Daher erfasst eine Absaugung des schmiermittelhaltigen Gases an dieser Stelle den grössten Anteil an Schmiermittel, das heisst bis zu 80% des Schmiermittels. Dieses mit dem schmiermittelhaltigen Gas abgesaugte Schmiermittel kann somit gar nicht mehr in die Spülluft gelangen und dort verteilt werden. Weil die Konzentration des Schmiermittels an der Stelle der Ausnehmung im Kolben am höchsten ist, ist die Rückgewinnung von Schmiermittel an dieser Stelle am effizientesten, das heisst der grösstmögliche Anteil an Schmiermittel kann aus dem schmiermittelhaltigen Gas entfernt werden. Dieses Schmiermittel kann somit nicht mehr in die Spülluft gelangen, wodurch die Schmiermittelbeladung der Spülluft wesentlich verringert wird, also ein gereinigtes Gas erhalten wird.

Als Richtwerte für den Schmiermittelgehalt für das gereinigte Gas wird ein Bereich von maximal 0,7 g Schmiermittel/ kWh vorgesehen, besonders bevorzugt maximal 0,2 g Schmiermittel/ kWh. In dem angegebenen Bereich für den Schmiermittelgehalt des gereinigten Gases kann ein Klopfen der Brennkraftmaschine, also eine Fehlzündung bedingt durch eine Selbstentzündung von im Brenngas enthaltenem Schmiermittel mit grosser Wahrscheinlichkeit vermieden werden. Für den besonders bevorzugten Bereich von maximal 0,2 g Schmiermittel / kWh kann Klopfen so gut wie ausgeschlossen werden. In diesem letztgenannten Fall entspricht der Schmiermittelgehalt maximal 10 ppm.

Grundsätzlich wird Gas, in der Regel Luft über die Spülöffnungen in den Brennraum eingebracht, wenn sich der Kolben im unteren Totpunkt von seinem Bewegungszyklus befindet. Dieses Gas gelangt über einen Ansaugstutzen in einen Turbolader oder Ladeluftkühler, wird entwässert und dann den Spülöffnungen zugeführt. Bei Mehrzylindermotoren wird der Raum ausserhalb der Spülöffnungen von mehreren Zylindern gemeinsam benutzt. Das heisst, der Gasraum ausserhalb der Spülöffnungen ist zumindest in geringem Mass den Druckdifferenzen ausgesetzt, die durch die Veränderung der Grösse des Spülraums durch die Bewegung des Kolbens vom unteren Totpunkt zum oberen Totpunkt und zurück entstehen. Die Spülöffnungen bilden eine freie Verbindung zwischen dem Spülraum, der unterhalb der Kolben in jedem Zylinder angeordnet ist und dem Gasraum, der ausserhalb der Zylinder angeordnet ist. Daher kommt es bei jeder Kolbenbewegung zu einem Rückschlageffekt in diesen Gasraum. Dieser Rückschlageffekt hat zur Folge, dass Gas aus dem Spülraum durch die Spülschlitze entweicht, somit enthält der Gasraum Schmiermittel, insbesondere in der Form eines Ölnebels. Daher enthält die über die Spülöffnungen in den Brennraum angesaugte Luft bereits Schmiermittel, da sie aus diesem Ölnebel angesaugt wird. Dieses schmiermittelhaltige Gas gelangt über den Spalt zwischen Zylinderinnenwand und Kolbenmantelfläche, gegebenenfalls über einen Kolbenring oder Abstreifring in die Ausnehmung. Der Spalt zwischen Zylinderinnenwand und Kolbenmantelfläche kann eine Drosselfunktion erfüllen, sodass auf einen Kolbenring und/oder ein Dichtungselement und/oder Schmiermittelabstreifring verzichtet werden kann, allerdings erhöhen die vorgenannten Bauelemente die Wirksamkeit der Schmiermittelabsaugung. Der Druck im Spülraum liegt hierbei bei ungefähr 3 bar, das heisst es besteht ein genügend grosses Druckgefälle für das schmiermittelhaltige Gas, das demzufolge in den Kanal eintritt und von dort über Verbindungsleitung in ein druckloses Reservoir eingeleitet wird. Das Reservoir kann selbst als Abscheider wirken oder gegebenenfalls mit einem zusätzlichen Separatorelement und/oder Filterelement ausgestattet sein.

Der Schmiermittelanteil im schmiermittelhaltigen Gas kann bis zu 10 Masseprozent betragen, vorzugsweise bis zu 5% insbesondere maximal 1 % betragen.

Somit ist es nicht erforderlich, dass Kolbenring und/oder ein Dichtungselement und/oder Schmiermittelabstreifring eine gasdichte Verbindung zum Spülraum gewährleisten, hingegen sollten Dichtungselemente vorgesehen sein, welche die Ausnehmung gegen den Brennraum abdichten. Die Temperatur sollte 100° C bis 150° C nicht übersteigen, 250° C wird als kritische Temperatur angesehen. Weil das schmiermittelhaltige Gas aus dem Spülraum somit kontinuierlich über die Ausnehmung in den oder die Kanäle eingeleitet wird, erfolgt eine Kühlung, sodass die Temperatur nicht auf die kritischen Werte ansteigen kann.

Insbesondere kann die Ausnehmung als ringförmige Nut ausgebildet sein, welche auf der Kolbenmantelfläche unterhalb des obersten Kolbenrings - wenn vorhanden - angeordnet ist. Diese ringförmige Nut steht in Verbindung mit einem Reservoir, welches unter Atmosphärendruck steht. Daher ist der Druck in der ringförmigen Nut nur geringfügig höher als der Atmosphärendruck, nämlich um die Summe der Druckverluste der Verbindungsleitung zwischen Reservoir und Ausnehmung höher. Der Druck oberhalb des Kolbenringes ist daher höher als der Druck in der Ausnehmung und auch der Druck unterhalb der Ausnehmung ist höher, er entspricht dem Ladeluftdruck. Bedingt durch diese Druckdifferenzen strömt schmiermittelhaltiges Gas, das heisst insbesondere schmiermittelhaltige Luft in die Ausnehmung und in den daran anschliessenden Kanal. Der Kanal führt über eine Mehrzahl von Bohrungen, Verbindungsleitungen bis in das Reservoir. Während des Weges entlang der Oberflächen des Kolbens sowie des Zylinders nimmt das Gas Schmiermittel auf, welches sich ansonsten an einigen der Oberflächen ansammeln würde.

Die Absaugung von schmiermittelhaltigem Gas aus dem Zylinderinnenraum kann zusätzlich durch das Anlegen von Unterdruck im Kanal mittels einer Vakuumpumpe verbessert werden, was insbesondere für Motoren ohne Turbolader vorteilhaft sein kann.

Insbesondere kann ein Kolbenring auf der Kolbenmantelfläche angeordnet sein, sodass ein vom Kolbenring, der Kolbenmantelfläche und dem Zylindermantel begrenzter Zwischenraum ausgebildet ist, der die Ausnehmung enthält.

Die für die Ableitung von schmiermittelhaltigem Gas durch den Kanal erforderliche Druckdifferenz zwischen Brennraumdruck und dem Druck im Kanal kann durch eine kontrollierte Leckage über einen Kolbenring erfolgen, der den Brennraum von der Ausnehmung abdichtet. In diesem Fall ist der Druck in der Ausnehmung höher als der Ladedruck.

Das heisst, gemäss einem Ausführungsbeispiel ist möglich, dass zwischen der Ausnehmung und dem Spülraum kein Kolbenring vorhanden ist. Auch kann die Nut relativ weit unten, zum Beispiel im Kolbenhemd angeordnet sein, wodurch die Absaugung zwar weniger wirksam sein kann, aber weniger heisse Luft in die Absaugung gelangt.

Nach einem Ausführungsbeispiel können ein erster Kolbenring und ein zweiter Kolbenring auf der Kolbenmantelfläche angeordnet sein, sodass ein vom ersten und zweiten Kolbenring, der Kolbenmantelfläche und dem Zylindermantel begrenzter Zwischenraum ausgebildet ist, der die Ausnehmung enthält.

Nach einem Ausführungsbeispiel kann eine Nut in der Kolbenmantelfläche ausgebildet sein, sodass durch die Nut ein Zwischenraum ausgebildet ist. Insbesondere kann die Nut als eine umlaufende Nut ausgebildet sein.

Der Zylinder weist einen Zylindermantel auf, welcher eine Mehrzahl von Spülöffnungen enthält, wobei das schmiermittelhaltige Gas in die Ausnehmung einleitbar ist, wenn der Kolben die Spülöffnungen überstreicht, wobei die Spülöffnungen insbesondere als Spülschlitze ausgebildet sind. Der Zylinder kann einen Zylinderkopf mit einer Innenseite aufweisen, an welchen der Zylindermantel anschliesst, wobei von der Kolbenoberseite, dem Zylindermantel und der Innenseite des Zylinderkopfes ein Brennraum begrenzt ist. Ein Spülraum schliesst an die Unterseite des Kolbens an, wobei der Fluiddruck im Inneren der Ausnehmung kleiner ist als der Druck im Brennraum und kleiner ist als der Druck im Spülraum.

Nach einem vorteilhaften Ausführungsbeispiel kann der Kanal im Kolbenkörper eine Bohrung umfassen, die in einen Ringkanal mündet. Der Kanal im Kolbenkörper kann eine Mehrzahl von Bohrungen umfassen, die in einen gemeinsamen Ringkanal münden. Vorteilhafterweise korrespondiert die Anzahl der Bohrungen mit der Anzahl der Spülöffnungen, insbesondere kann die Anzahl der Bohrungen gleich der Anzahl der Spülöffnungen sein oder ein Vielfaches der Anzahl der Spülöffnungen betragen.

Nach einem Ausführungsbeispiel kann der Kanal dem Reservoir, das heisst insbesondere mit einem drucklosen Separatorelement und/ oder Filterelement in fluidleitender Verbindung stehen. Das Separatorelement und/oder das Filterelement können an einer beliebigen Stelle im Kanal angeordnet sein.

Insbesondere kann der Kanal ein Austrittsende aufweisen, wobei das Austrittsende des Kanals in das drucklose Separatorelement mündet. Die Ausnehmung kann ein Eintrittsende umfassen, welches ein Ablenkelement zur Ablenkung von flüssigem Schmiermittel auf den Kolbenmantel aufweist. Das Ablenkelement kann als ein Vorsprung ausgebildet sein, der verhindert, dass flüssiges Schmiermittel nicht in den Kanal gelangt, sondern für die Kolbenschmierung eingesetzt werden kann. Alternativ dazu oder in Ergänzung kann ein Abstreifelement, insbesondere ein Abstreifring vorgesehen sein, mittels welchem flüssiges Schmiermittel von schmiermittelhaltigem Gas getrennt wird.

Des Weiteren können ein Drosselelement und/oder ein Ventil und/oder eine Pumpe stromabwärts des Eintrittsendes angeordnet sein. Das Drosselelement und/oder das Ventil und/oder die Pumpe können eine Vorrichtung zur Regelung des Durchflusses enthalten. Insbesondere können das Ventil und/oder das Drosselelement und/oder die Pumpe für eine variable Fördermenge ausgelegt sein. Hiermit kann der Durchfluss des schmiermittelhaltigen Gases in Abhängigkeit von den Betriebsbedingungen der Brennkraftmaschine eingestellt werden. Die Betriebsbedingungen umfassen die Last, den verwendeten Brennstoff, das verwendete Schmiermittel, der Volumenstrom des Schmiermittels, die Regelung des Emissionsverhaltens der Brennkraftmaschine. Alternativ oder in Ergänzung hierzu kann der Durchfluss auch in Abhängigkeit vom Kolbenhub geregelt werden.

Ein Grossmotor umfasst eine Kolben-Zylindereinheit nach einem der vorhergehenden Ausführungsbeispiele, wobei der Kanal durch den Kolben in die Kolbenstange und/oder in einen Kniehebel und/oder ein Teleskoprohr und/oder einen Ständer verläuft.

Mit der Schmiermittelsammelvorrichtung erfolgt die Absaugung von schmiermittelhaltiger Luft zur Verringerung von Emissionen und/oder der Selbstentzündung von Schmiermittel, welches über die Kolbenringe oder über die Kolbenmantelfläche in den Brennraum der Hubkolbenbrennkraftmaschine gelangt ist. Des Weiteren dient die Schmiermittelsammelvorrichtung gemäss der Erfindung der Wiederverwertung von Schmiermittel. Hierzu führt ein Schmiermittelkanal vom Kolben durch die Kurbelstange über einen Kniehebel zu einem Reservoir. Durch den Schmiermittelkanal wird Luft, die Schmiermitteltröpfchen enthält, zu dem Reservoir geführt und dort gefiltert. Ziel der Erfindung ist es, den Schmiermittelanteil der Luft im Brennraum zu reduzieren.

Eine Regelungsvorrichtung kann vorgesehen sein, mittels welcher die Regelung des Luftstroms in Abhängigkeit vom Betriebszustand der Brennkraftmaschine erfolgt. Die Regelungsvorrichtung kann insbesondere den Durchfluss durch die Drossel, das Ventil oder der Pumpe verändern. Des Weiteren kann eine Veränderung der Druckdifferenz durch eine Pumpe erfolgen, welche zwischen Separatorelement und/oder Reservoir angeordnet ist. Das Separatorelement kann an das Reservoir angeschlossen sein oder in fluidleitender Verbindung mit dem Reservoir stehen.

Insbesondere kann das Reservoir einen Druck aufweisen, der kleiner als Atmosphärendruck ist. Der Unterdruck kann beispielsweise durch eine Vakuumpumpe erzeugt oder die negative Druckdifferenz erhöht werden.

Vorteilhafterweise wird das Schmiermittel aus dem Reservoir für eine erneute Schmierung eingesetzt, sodass der Gesamtverbrauch an Schmiermittel verringert werden kann.

Das Verfahren zur Ableitung eines schmiermittelhaltigen Gasstroms aus einem Zylinderinnenraum eines einer Kolben-Zylindereinheit umfasst die folgenden Schritte: Bewegen eines Kolbens, welcher eine Kolbenmantelfläche, eine Kolbenoberseite und eine Kolbenunterseite aufweist, entlang eines Zylindermantels eines Zylinders, von einem oberen Totpunkt zu einem unteren Totpunkt und Umkehr der Bewegung. Der Kolben enthält eine Schmiermittelsammelvorrichtung, die im Kolbenkörper angeordnet ist. Während der Bewegung des Kolbens vom unteren Totpunkt zum oberen Totpunkt wird das zwischen Kolben, Zylindermantel und Innenseite des Zylinderkopfs im Brennraum vorhandene Gas komprimiert. Während der Bewegung des Kolbens entlang des Zylindermantels erfolgt eine Schmierung der Gleitflächen von Kolbenmantel und Zylindermantel. Um zu vermeiden, dass Schmiermittel in den Brennraum gelangt, ist die Schmiermittelsammelvorrichtung vorgesehen, die eine Ausnehmung an der Kolbenmantelfläche und einen Kanal zur Aufnahme von schmiermittelhaltigem Gas umfasst, wobei sich der Kanal im Kolbenkörper an die Ausnehmung anschliesst. Ein schmiermittelhaltiges Gas wird während der Bewegung des Kolbens und/oder während des Überstreichens des Kolbens der Spülöffnungen im Zylindermantel durch den Kanal hindurch in ein Reservoir eingeleitet. Weil der Fluiddruck im Inneren der Ausnehmung kleiner ist als der Druck im Brennraum und kleiner ist als der Druck im Spülraum, wird das schmiermittelhaltige Gas aus dem von der Ausnehmung und dem Zylindermantel und der Kolbenmantelfläche gebildete Zwischenraum abgesaugt. Das schmiermittelhaltige Gas kann in ein Separatorelement eingeleitet werden. Im Separatorelement wird das Schmiermittel vom Gas getrennt, wodurch das Gas gereinigt wird und das Schmiermittel gesammelt wird. Das Schmiermittel kann rezykliert werden, das heisst erneut für die Schmierung der Lauffläche am Zylindermantel zum Einsatz kommen.

Besondere Vorteile hat die Erfindung demnach für längsgespülte oder umkehrgespülte Motoren. Insbesondere kann die Erfindung für Motoren mit Kreuzkopfantrieb verwendet werden, das Prinzip ist allerdings auf all Arten von Kolbenmotoren verwendbar, die als Brennkraftmaschinen zum Einsatz kommen. Diese Motoren sind **dadurch gekennzeichnet, dass** der Weg der Luft vom Einlassreceiver, also vom Eintritt der Luft in den Motor, über die Kolbenunterseite bis zu den Spülschlitzen weit ist und hierbei viele Gelegenheiten zur Aufnahme von Schmiermitteltröpfchen gegeben sind.

Ein weiterer Vorteil der Erfindung ist das verminderte Ablagern von Russ bzw. Verbrennungsrückständen, da der Schmiermittelanteil reduziert wird.

Insbesondere kann die Erfindung für Motoren mit vorgemischtem Brennstoff, aber auch für Dieselmotoren, Motoren mit dualem Brennstoff oder Gasmotoren vorteilhaft eingesetzt werden.

Insbesondere können die Motoren eine hohe Kompressionsrate und/oder einen hohen Arbeitsdruck aufweisen. Die Motoren können als langsam laufende Zweitaktmotoren ausgebildet sein und können auch Viertaktmotoren sein, die eine mittlere oder hohe Laufgeschwindigkeit aufweisen.

Für die Zufuhr der Luft kann ein Turbolader vorgesehen sein. Unabhängig von der Art der Schmierung des Zylinders, wird ein grosser Teil des Schmiermittels insbesondere bei Zweitaktmoren mit Kreuzkopfantrieb lokal in die Luft eingesprüht, weil der Luftstrom eine hohe Geschwindigkeit aufweist. Der Sprüheffekt steht insbesondere in Zusammenhang mit der dauernden Leckage von Luft und/oder Abgas durch die Kolbenringe und dem Rückschlageffekt der Luft und/oder des Abgases bei der Öffnung der Spülschlitze. Der hierdurch entstehende Ölnebel wird mit der gesamten Spülluft vermischt, weil es zu intensiven Bewegungen der Luft kommt, welche im Spülraum auf der Unterseite der Kolben vorhanden ist. Der Ölnebel durchmischt sich mit dieser Luft und gelangt in die Brennkammer, sobald die Spülschlitze frei sind, wenn sich der Kolben am unteren Totpunkt befindet. Da schmierstoffhaltige Luft im Brennraum zu Selbstentzündungen des Schmiermittels sowie des Brennstoffs führen kann, ist der Eintritt von Schmiermittel in den Brennraum zu vermeiden. Daher wird gemäss der Erfindung die Schmiermittelkonzentration in der Luft verringert. Durch die Erfindung wird der lokal vorhandene Ölnebel in der Umgebung des Kolbens über den Spalt zwischen Zylinderinnenwand und Kolbenmantelfläche in eine Ausnehmung durch Druckdifferenz abgesaugt. Hierdurch wird eine Vermischung dieses Ölnebels mit der gesamten Spülluft vermieden, da der Ölnebel gar nicht mehr mit der Spülluft in Kontakt kommen kann, sondern vorher abgesaugt wird. Der Ölnebel selbst trägt kaum zur Schmierung bei und erhöht somit den Schmiermittelverbrauch unnötig. Dieser Ölnebel wird daher unmittelbar am Ort seiner Entstehung aus dem Zylinderinnenraum abgesaugt und in der Folge vorteilhafterweise aus der Luft über ein Separatorelement oder Filterelement herausgefiltert und steht danach einem erneuten Schmierzyklus zur Verfügung. Somit wird der Schmiermittelverbrauch verringert.

Die obige Beschreibung sowie die Ausführungsbeispiele dienen lediglich als Beispiel zur Erläuterung der Funktionsweise der Erfindung. Weitere vorteilhafte Ausführungsbeispiele gehen aus den abhängigen Ansprüchen sowie den Zeichnungen hervor. Darüber hinaus können im Rahmen der vorliegenden Erfindung auch einzelnen Merkmale aus den beschriebenen oder gezeigten Ausführungsbeispielen miteinander beliebig kombiniert werden.

Nachfolgend wird die Erfindung anhand der beiliegenden Zeichnungen näher erläutert.

Es zeigen
Fig. 1 einen Schnitt durch eine Kolben-Zylindereinheit nach einem ersten erfindungsgemässen Ausführungsbeispiel,
Fig. 2 einen Schnitt durch eine Kolben-Zylindereinheit nach einem zweiten erfindungsgemässen Ausführungsbeispiel,
Fig. 3 einen Ausschnitt des Kolbens gemäss Fig. 2,
Fig. 4 eine Ansicht eines Grossmotors mit einer Schmiermittelsammelvorrichtung gemäss eines dritten Ausführungsbeispiels der Erfindung.

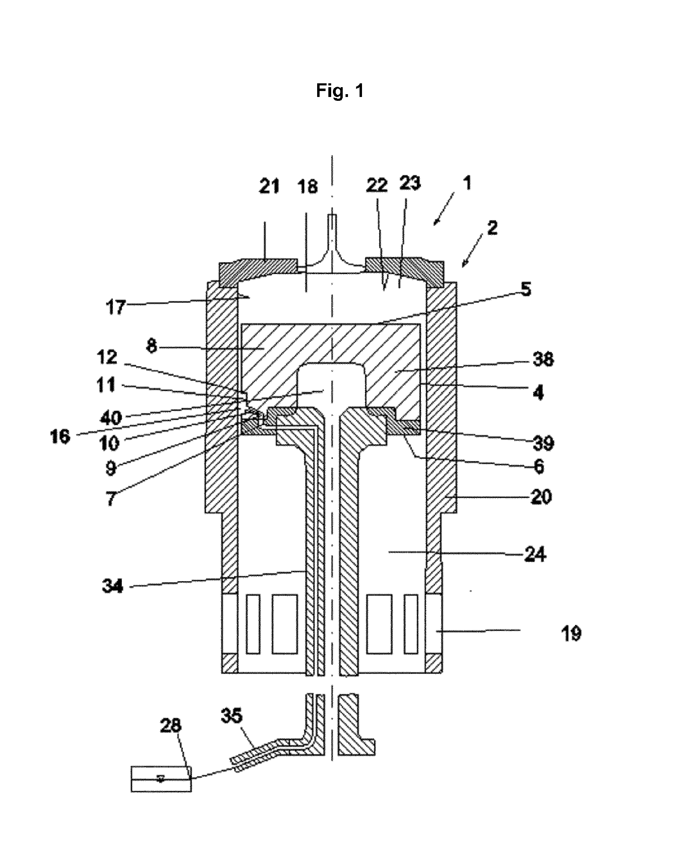

Die Kolben-Zylinder Einheit 2 gemäss Fig. 1 umfasst einen Zylinder 20 sowie einen Kolben 3. Der Zylinder 20 weist einen Zylindermantel 17 auf, der einen Zylinderinnenraum 18 begrenzt. Der Kolben 3 weist eine Kolbenmantelfläche 4, eine Kolbenoberseite 5 und eine Kolbenunterseite 6 auf. Die Kolbenmantelfläche 4, die Kolbenoberseite 5 und die Kolbenunterseite 6 begrenzen einen Kolbenkörper 8. Der Kolbenkörper 8 kann aus mehreren Teilen bestehen, beispielsweise einen Kolbenkopf 38 und ein Kolbenhemd 39 umfassen. Der Kolbenkörper 8 kann zumindest teilweise mit einem Hohlraum 40 versehen sein, durch welchen ein Kühlmittel in den Kolbenkörper 8 eingebracht werden kann. Der Kolben 3 enthält eine Schmiermittelsammelvorrichtung 7, die im Kolbenkörper 8 angeordnet ist. Die Schmiermittelsammelvorrichtung 7 umfasst eine Ausnehmung 11 an der Kolbenmantelfläche 4 und einen Kanal 9 zur Aufnahme von schmiermittelhaltigem Gas 10. Der Kanal 9 schliesst im Kolbenkörper 8 an die Ausnehmung 11 an, sodass das schmiermittelhaltige Gas 10 im Betriebszustand durch den Kanal 9 hindurch in ein Reservoir 13 einleitbar ist. Die Ausnehmung 11 ist insbesondere als Nut 12 in der Kolbenmantelfläche 4 ausgebildet, sodass durch die Nut 12 ein Zwischenraum 16 zwischen Kolbenmantelfläche 4 und Zylindermantel 17 ausgebildet ist. Die Nut 12 kann sich über einen Teil des Umfangs der Kolbenmantelfläche 4 erstrecken. Insbesondere kann auch eine Mehrzahl derartiger Nuten am Umfang der Kolbenmantelfläche vorgesehen sein, was zeichnerisch nicht dargestellt ist. An diese Nut oder jede dieser Nuten 12 schliesst zumindest ein Kanal 9 an.

Der Zylinder 20 weist einen Zylindermantel 17 auf, welcher eine Mehrzahl von Spülöffnungen 19 enthält, wobei das schmiermittelhaltige Gas 10 in die Ausnehmung 11 einleitbar ist, wenn der Kolben 3 die Spülöffnungen 19 überstreicht.

Der Zylinder 20 weist einen Zylinderkopf 21 mit einer Innenseite 22 auf, an welchen der Zylindermantel 17 anschliesst, wobei von der Kolbenoberseite, dem Zylindermantel 17 und der Innenseite 22 des Zylinderkopfes 21 ein Brennraum 23 begrenzt ist. Ein Spülraum 24 schliesst an die Kolbenunterseite 6 an, wobei der Fluiddruck im Inneren der Ausnehmung 11 1 kleiner als der Druck im Brennraum und kleiner als der Druck im Spülraum 24 ist.

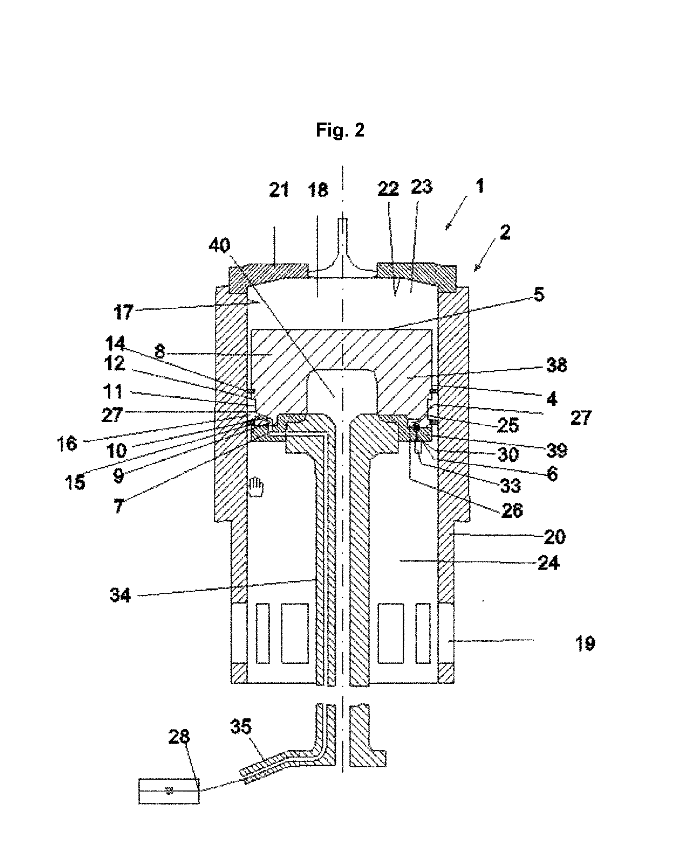

Fig. 2 zeigt ein Ausführungsbeispiel einer Kolben-Zylinder Einheit, gemäss welcher ein erster Kolbenring 14 und ein zweiter Kolbenring 15 auf der Kolbenmantelfläche 4 angeordnet ist, sodass ein vom Kolbenring 14, der Kolbenmantelfläche 4 und dem Zylindermantel 17 begrenzter Zwischenraum 16 ausgebildet ist, der die Ausnehmung 11 enthält. Die Ausnehmung 11 ist als umlaufende Nut 12 in der Kolbenmantelfläche 4 ausgebildet, sodass durch die Nut 12 sowie die Kolbenringe 14, 15 ein Zwischenraum 16 zwischen Kolbenmantelfläche 4 und Zylindermantel 17 ausgebildet ist. Insbesondere kann auch eine Mehrzahl derartiger Nuten parallel zueinander am Umfang der Kolbenmantelfläche vorgesehen sein, was zeichnerisch nicht dargestellt ist. An diese Nut oder jede dieser Nuten 12 schliesst zumindest ein Kanal 9 an.

Der Kolbenring 14 bildet eine im Wesentlichen gasdichte Verbindung zum Brennraum 23 aus. Der Kolbenring 15 hat keine gasdichte Ausführung. Er kann auch als Schmiermittelabstreifring ausgebildet sein. Zwischen dem Kolbenring 14 und dem Kolbenring 15 ist die Ausnehmung angeordnet. Die Ausnehmung weist nach einem vorteilhaften Ausführungsbeispiel für einen Zylinderinnendurchmesser von 500 mm 15 Bohrungen mit einem Durchmesser von 4 mm auf.

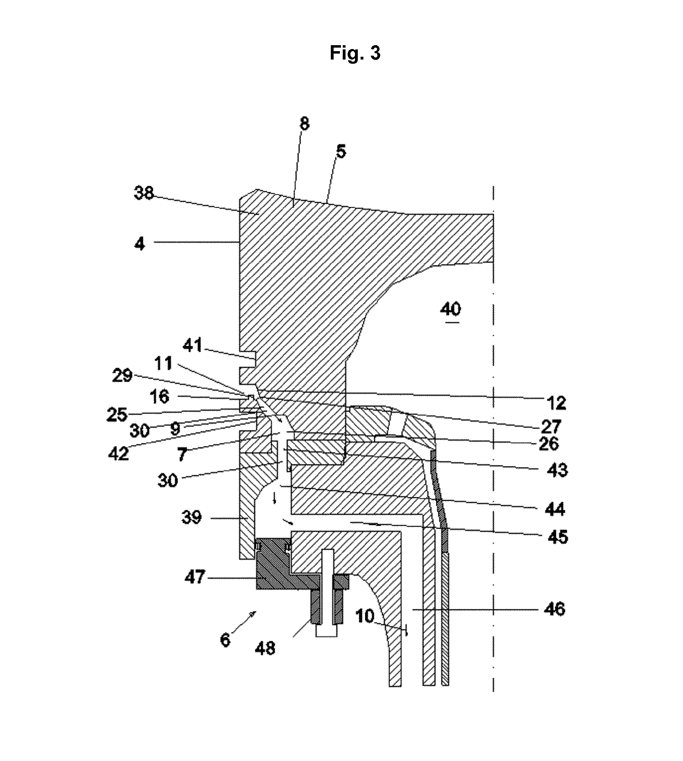

Fig. 3 zeigt einen Ausschnitt des Kolbens gemäss Fig. 2. Fig. 3 zeigt eine Kolbenhälfte, die eine Kolbenoberseite 5, eine Kolbenunterseite 6 sowie eine Kolbenmantelfläche 4 aufweist. Der Kolben 3 ist wie in Fig. 2 aus einem Kolbenkopf 38 und einem Kolbenhemd 39 aufgebaut. Kolbenkopf 38 und Kolbenhemd 39 bilden einen Kolbenkörper 8 aus, der eine Schmiermittelsammelvorrichtung 7 enthält. Die Schmiermittelsammelvorrichtung 7 ist als ein Kanal 9 ausgebildet, der zur Aufnahme von schmiermittelhaltigem Gas 10 dient. Der Strömungsweg des schmiermittelhaltigen Gases 10 ist durch Pfeile gekennzeichnet. Der Kanal 9 verläuft von einem Eintrittsende 27 zu einem nicht dargestellten Austrittsende 28. Das Eintrittsende 27 befindet sich in einem Zwischenraum 16, der von einer Nut 12 gebildet ist, die eine Ausnehmung 11 ausbildet und die wie in Fig. 1 sich über einen Teil der Kolbenmantelfläche erstrecken kann oder sich wie in Fig. 2 gezeigt über den gesamten Umfang der Kolbenmantelfläche erstreckt und im Wesentlichen parallel zu den Nuten 41, 42 für die Kolbenringe 14, 15 verläuft. Die Kolbenringe sind in dieser Darstellung ebenfalls weggelassen worden. Das Eintrittsende 27 weist ein Ablenkelement 29 auf, welches verhindert, dass flüssiges Schmiermittel in den Kanal 9 eintritt. Das Ablenkelement kann insbesondere als Vorsprung ausgebildet sein, kann aber auch ein Abstreifelement, insbesondere einen Abstreifring umfassen. Der Kanal 9 kann ein oder mehrere Drosselelemente 30 umfassen. Insbesondere können das oder die Drosselelemente 30 als Verengungen des Kanals 9 ausgebildet sein.

Der Kanal 9 im Kolbenkopf ist als Bohrung 25 ausgebildet, die in einen Ringkanal 26 mündet, dar auf der Unterseite des Kolbenkopfes in den Kolbenkörper 8 eingearbeitet ist. Die Bearbeitung des Kanals 9 sowie des Ringkanals 26 kann mittels spanabhebenden Verfahren erfolgen. Insbesondere kann eine Mehrzahl von Bohrungen 25 am Umfang der Ausnehmung 11 vorgesehen sein. Der Ringkanal 26 kann beispielsweise durch Fräsen oder Drehen erzeugt werden. Der Ringkanal 26 mündet in einen oder eine Mehrzahl von ersten Kanalabschnitten 43, die im Kolbenkörper 8 des Kolbenhemds angeordnet sind und die zumindest teilweise als Drosselelement 30 ausgebildet sein können. Der erste Kanalabschnitt 43 mündet in einen zweiten Kanalabschnitt 44, der zwischen Kolbenhemd 39 und der Kolbenstange 34 angeordnet ist. In der Kolbenstange setzt sich der Kanal mit dem dritten Kanalabschnitt 45 und dem vierten Kanalabschnitt 46 fort. Der zweite Kanalabschnitt 44 ist von der Umgebung durch ein Dichtelement 47 zu verschliessen, um einen Austritt des schmiermittelhaltigen Gases in die Umgebung zu vermeiden. Mittels des Dichtelements 47 können Dehnungen bedingt durch unterschiedliche Wärmespannungen zwischen Kolbenhemd 39 und Kolbenstange 34 ausgeglichen werden. Zudem kann das Dichtelement 47 mit einer Demontagevorrichtung 48 ausgestattet sein, welche eine Entfernung des Dichtelements 47 erlaubt, beispielsweise um den Kanal 9 zu reinigen oder um das Dichtelement im Rahmen einer vorbeugenden Instandhaltungsmassnahme zu ersetzen.

Die Bohrungen, welche das Drosselelement 30 bilden, welches unmittelbar an die Ausnehmung 11 anschliesst, können insbesondere einen Durchmesser von bis zu 4 mm aufweisen und es können bis zu 30 derartige Bohrungen, vorzugsweise bis zu 15 Bohrungen am Umfang der Kolbenmantelfläche 4 verteilt angeordnet sein. Die Bohrungen münden in den Ringkanal 26. Vom Ringkanal 26 zweigen weitere Bohrungen ab, die ebenfalls als ein Drosselelement 30 ausgebildet sind. Vorzugsweise sind ebenfalls bis zu 15 Bohrungen vorgesehen, die einen Durchmesser von bis zu 10 mm, vorzugsweise bis zu 6 mm aufweisen. Zumindest ein Teil der Bohrungen 25 hat einen kleineren Durchmesser als der Durchmesser der in Kanalabschnitt 43. Die Summe der Querschnitte der Bohrungen 25 ist vorteilhafterweise kleiner als der Querschnitt von Kanalabschnitt 43. Auch diese Bohrungen münden in einen Ringkanal, welcher den zweiten Kanalabschnitt 44 ausbildet. Vom zweiten Kanalabschnitt 44 kann ein einziger Kanal vorgesehen sein, welcher den dritten Kanalabschnitt 45 und den vierten Kanalabschnitt 45 ausbildet. Der dritte Kanalabschnitt 44 und/oder der vierte Kanalabschnitt 45 haben einen Durchmesser von bis zu 30 mm, vorzugsweise bis zu 25 mm.

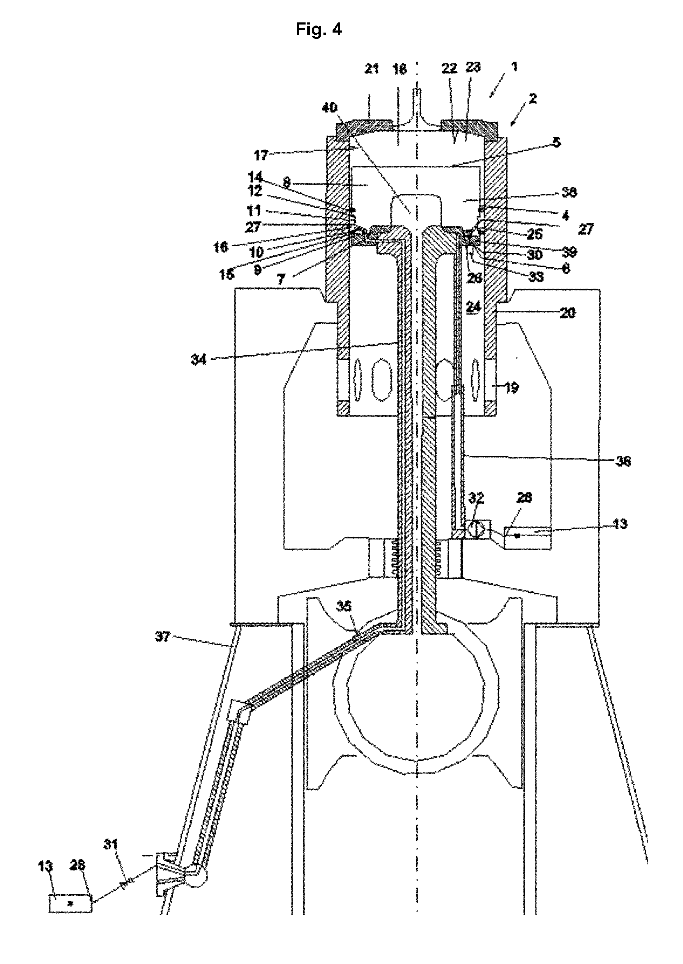

Fig. 4 zeigt einen Grossmotor mit einer Kolben-Zylinderanordnung nach einem weiteren Ausführungsbeispiel der Erfindung. Insbesondere werden zwei Varianten für den Verlauf des Kanals 9 gezeigt. Wie in den vorhergehenden Ausführungsbeispielen umfasst der Kanal 9 im Kolbenkörper 8 eine Bohrung 25, die in einen Ringkanal 26 mündet. Insbesondere korrespondiert die Anzahl der Bohrungen 25 mit der Anzahl der Spülöffnungen 19, sie ist insbesondere gleich der Anzahl der Spülöffnungen oder beträgt ein Vielfaches der Anzahl der Spülöffnungen oder beträgt einen Bruchteil der Anzahl an Spülöffnungen. Insbesondere kann eine regelmässige Teilung der Spülöffnungen vorgesehen sein.

Der Kanal 9 steht mit einem drucklosen Separatorelement und/ oder Filterelement 13 in fluidleitender Verbindung. In dem Separatorelement und/oder Filterelement wird das Schmiermittel aus dem schmiermittelhaltigen Gasstrom 10 abgeschieden. Fig. 4 zeigt zwei Separatorelemente 13.

Das erste der beiden Separatorelemente wird über eine Zuleitung gespeist, die durch die Kolbenstange 34 verläuft. Die Zuleitung kann den dritten Kanalabschnitt 45 und den vierten Kanalabschnitt 46 der Fig. 3 umfassen. Am ständerseitigen Ende der Kolbenstange 34 mündet der Kanal 9 in einen Kanal, der im Inneren des Kniehebels 35 verläuft. Der Kniehebel bildet eine gelenkige Verbindung zwischen einer Andockvorrichtung, welche ortsfest am Ständer 37 montiert ist und der Kolbenstange. Der Kniehebel bewegt sich in an sich bekannter Weise mit dem Gleitschuh mit.

Von der Andockvorrichtung gelangt das schmiermittelhaltige Gas 10 zum Austrittsende 28, welches den Eintritt in das Separatorelement bildet, das heisst das Austrittsende 28 des Kanals 9 mündet in das drucklose Separatorelement. Im Kanal kann auch ein Absperrmittel, wie beispielsweise ein Ventil 31 vorgesehen sein.

Nach einer weiteren, ebenfalls in Fig. 4 dargestellten Variante, verläuft der Kanal 9 durch den Kolben 3 in ein Teleskoprohr 36 und/oder einen Ständer 37. Das Teleskoprohr 36 enthält den Kanal 9 und hat ein Innenrohr mit einem ersten Ende, welches mit dem Kolbenhemd 39 oder der Kolbenstange 34 verbunden ist. Das Innenrohr hat ein zweites Ende, welches in einem Aussenrohr aufgenommen ist. Das Aussenrohr ist ortsfest am Gehäuse oder am Ständer 37 (nicht dargestellt) befestigt. Die Positionen von Innenrohr und Aussenrohr können selbstverständlich vertauscht sein. Gemäss Fig. 4 führt der Kanal 9 zu einer Pumpe 32, die insbesondere als Vakuumpumpe ausgebildet sein kann. Die Pumpe kann insbesondere bei Brennkraftmaschinen mit Turboladern entfallen. Der Kanal 9 endet wiederum am Austrittsende 28 welches in ein Separatorelement und/oder Filterelement 13 mündet. Die Funktion des Separatorelements und/oder Filterelements unterscheidet sich nicht von der vorhin beschriebenen Variante, daher wird auf die früheren Ausführungen verwiesen.

Jedes der Drosselelemente 30 und/oder das Ventil 31 und/oder die Pumpe 32 ist stromabwärts des Eintrittsendes 27 angeordnet. Das Drosselelement 30 und/oder das Ventil 31 und/oder die Pumpe 32 können eine Regelungsvorrichtung 33 zur Regelung des Durchflusses enthalten.

## Patentansprüche

1. Kolben-Zylinder Einheit (2) für eine Brennkraftmaschine, insbesondere einen Grossmotor (1) oder Kompressor umfassend einen Zylinder (20) sowie einen Kolben (3), wobei der Zylinder (20) einen Zylindermantel (17) aufweist, der einen Zylinderinnenraum (18) begrenzt, wobei der Kolben (3) eine Kolbenmantelfläche (4), eine Kolbenoberseite (5) und eine Kolbenunterseite (6) aufweist, wobei der Kolben (3) eine Schmiermittelsammelvorrichtung (7) enthält, die im Kolbenkörper (8) angeordnet ist, **dadurch gekennzeichnet, dass** die Schmiermittelsammelvorrichtung (7) eine Ausnehmung (11) an der Kolbenmantelfläche (4 )und einen Kanal (9) zur Aufnahme von schmiermittelhaltigem Gas (10) umfasst, wobei sich der Kanal (9) im Kolbenkörper (8) an die Ausnehmung (11) anschliesst, sodass das schmiermittelhaltiges Gas (10) im Betriebszustand durch den Kanal (9) hindurch in ein Reservoir (13) einleitbar ist.

2. Kolben-Zylinder Einheit (2) nach Anspruch 1, wobei ein Kolbenring (14) auf der Kolbenmantelfläche (4) angeordnet ist, sodass ein vom Kolbenring (14), der Kolbenmantelfläche (4) und dem Zylindermantel (17) begrenzter Zwischenraum (16) ausgebildet ist, der die Ausnehmung (11) enthält.

3. Kolben-Zylindereinheit (2) nach einem der vorhergehenden Ansprüche, wobei eine Nut (12) in der Kolbenmantelfläche (4) ausgebildet ist, sodass durch die Nut (12) ein Zwischenraum (16) ausgebildet ist.

4. Kolben-Zylindereinheit (2) nach Anspruch 3, wobei die Nut (12) als eine umlaufende Nut ausgebildet ist.

5. Kolben-Zylindereinheit (2) nach einem der vorhergehenden Ansprüche, wobei der Zylinder (20) einen Zylindermantel (17) aufweist, welcher eine Mehrzahl von Spülöffnungen (19) enthält, wobei das schmiermittelhaltige Gas (10) in die Ausnehmung (11) einleitbar ist, wenn der Kolben (3) die Spülöffnungen (19) überstreicht.

6. Kolben-Zylindereinheit (2) nach einem der vorhergehenden Ansprüche, wobei der Zylinder (20) einen Zylinderkopf (21) mit einer Innenseite (22) aufweist, an welchen der Zylindermantel (17) anschliesst, wobei von der Kolbenoberseite , dem Zylindermantel (17) und der Innenseite (22) des Zylinderkopfes (21) ein Brennraum (23) begrenzt ist, wobei ein Spülraum (24) an die Kolbenunterseite (6) anschliesst, wobei der Fluiddruck im Inneren der Ausnehmung (11) kleiner ist als der Druck im Brennraum und kleiner ist als der Druck im Spülraum (24).

7. Kolben-Zylindereinheit (2) nach einem der vorhergehenden Ansprüche, wobei der Kanal (9) im Kolbenkörper (8) eine Bohrung (25) umfasst, die in einen Ringkanal (26) mündet.

8. Kolben-Zylindereinheit (2) nach einem der vorhergehenden Ansprüche, wobei der Kanal (9) im Kolbenkörper (8) eine Mehrzahl von Bohrungen (25) umfasst, die in einen gemeinsamen Ringkanal (26) münden.

9. Kolben-Zylindereinheit (2) nach Anspruch 8, wenn abhängig von Anspruch 5, wobei die Anzahl der Bohrungen (25) mit der Anzahl der Spülöffnungen (19) korrespondiert, insbesondere gleich der Anzahl der Spülöffnungen ist oder ein Vielfaches der Anzahl der Spülöffnungen oder einen Bruchteil der Anzahl an Spülöffnungen beträgt.

10. Kolben-Zylindereinheit (2) nach einem der vorhergehenden Ansprüche, wobei der Kanal (9) mit einem drucklosen Separatorelement und/ oder Filterelement in fluidleitender Verbindung steht.

11. Kolben-Zylindereinheit (2) nach einem der vorhergehenden Ansprüche, wobei der Kanal (9) ein Austrittsende (28) aufweist, wobei das Austrittsende (28) des Kanals (9) in das drucklose Separatorelement mündet.

12. Kolben-Zylindereinheit (2) nach einem der vorhergehenden Ansprüche, wobei die Ausnehmung (11) als ein Eintrittsende (27) ausgebildet ist, welches ein Ablenkelement (29) zur Ablenkung von flüssigem Schmiermittel auf die Kolbenmantelfläche (4) aufweist.

13. Kolben-Zylindereinheit (2) nach Anspruch 12, wobei ein Drosselelement (30) und/oder ein Ventil (31) und/oder eine Pumpe (32) stromabwärts des Eintrittsendes (27) angeordnet ist.

14. Kolben-Zylindereinheit (2) nach Anspruch 13, wobei das Drosselelement (30) und/oder das Ventil (31) und/oder die Pumpe (32) eine Regelungsvorrichtung (33) zur Regelung des Durchflusses enthalten.

15. Grossmotor (1) umfassend eine Kolben-Zylindereinheit (2) nach einem der vorhergehenden Ansprüche, wobei der Kanal (9) durch den Kolben (3) in die Kolbenstange (34) und/oder in einen Kniehebel (35) und/oder ein Teleskoprohr (36) und/oder einen Ständer (37) verläuft.
